# EUROPÄISCHE PATENTSCHRIFT

(11) **EP 4 357 584 B1**
(45) Veröffentlichungstag und Bekanntmachung des Hinweises auf die Patenterteilung: **13.08.2025**
(21) Anmeldenummer: 23204886.8
(22) Anmeldetag: 20.10.2023
(51) Int. Cl.: E21B 44/00, E21B 47/08, E21B 47/085, E21B 47/09, E21B 47/0228, E21B 7/04

(54) **VERFAHREN ZUM EINBRINGEN EINES BOHRKANALS IM ERDREICH MITTELS EINER ERDBOHRVORRICHTUNG SOWIE ERDBOHRVORRICHTUNG ZUM EINBRINGEN EINES BOHRKANALS IM ERDREICH**
METHOD FOR INSERTING A DRILLING CHANNEL IN THE SOIL BY MEANS OF A GROUND DRILLING DEVICE AND GROUND DRILLING DEVICE FOR INSERTING A DRILLING CHANNEL IN THE SOIL
PROCÉDÉ D'INTRODUCTION D'UN CANAL DE FORAGE DANS LE SOL AU MOYEN D'UN DISPOSITIF DE FORAGE DU SOL ET DISPOSITIF DE FORAGE DU SOL DESTINÉ À L'INTRODUCTION D'UN CANAL DE FORAGE DANS LE SOL

(30) Priorität: 21.10.2022 EP 22203146
(43) Veröffentlichungstag der Anmeldung: 24.04.2024
(73) Patentinhaber: TRACTO-TECHNIK GmbH & Co. KG, 57368 Lennestadt (DE)
(72) Erfinder: FUNKE, Ferdinand, 57413 Finnentrop (DE); HANSES, Andreas Joachim, 57368 Lennestadt (DE); KOCH, Elmar, 59889 Eslohe (DE); SCHAUERTE, Thomas, 57368 Lennestadt (DE); KLEIN, Tobias, 57368 Lennestadt (DE)
(74) Vertreter: Hoffmann Eitle

(56) Entgegenhaltungen:
- WO-A2-03/080988
- US-A1- 2017 010 388

## Beschreibung

Die Erfindung betrifft ein Verfahren zum Einbringen eines Bohrkanals im Erdreich mittels einer Erdbohrvorrichtung, ein Computerprogrammprodukt umfassend Befehle, die bei der Ausführung des Programms durch einen Computer diesen veranlassen, das Verfahren durchzuführen, einen computerlesbaren Datenträger, auf dem das Computerprogrammprodukt gespeichert ist, sowie eine Erdbohrvorrichtung zum Einbringen eines Bohrkanals im Erdreich.

Es ist bekannt, Erdbohrvorrichtungen zu verwenden, um Erdbohrungen bzw. Bohrkanäle in das Erdreich einzubringen.

Hindernisse im Bereich des zu erstellenden Bohrkanals stellen ein Problem dar. Bei diesen Hindernissen kann es sich um harte Gesteinsbrocken, welche durch die verwendeten Erdbohrvorrichtungen nicht zerkleinert werden können, oder um Wasser-, Gas-, Strom-, Signal- und/oder sonstige Leitungen oder Kanäle handeln.

Beispielsweise ist aus DE 10 2008 026 456 A1 ein Bohrkopf einer Erdbohrvorrichtung bekannt, der ein Gehäuse sowie eine innerhalb des Gehäuses angeordnete Radareinheit aufweist. Die Radareinheit erzeugt elektromagnetische Wellen, die aus dem Gehäuse austreten. Mittels des Empfangens dieser Wellen, nachdem sie von einem Gegenstand reflektiert wurden, ist die Berechnung der Entfernung, Form, Größe und Lage des Gegenstands möglich. Ein automatisches oder manuelles Umfahren des oder der Hindernisse kann durch eine entsprechende Ansteuerung einer Antriebseinheit realisiert werden.

Auch wenn mittels lenkbarer Vorrichtungen ein automatisches Umfahren möglich ist, so bleibt insbesondere für nicht im ausreichenden Maße lenkbare Erdbohrvorrichtungen bzw. im Wesentlichen nicht lenkbare Erdbohrvorrichtungen die Herausforderung, wie auf ein Hindernis im geplanten Bohrkanal und dessen Umfeld reagiert werden soll. Es ist bekannt, eine Notabschaltung durchzuführen, wenn ein Hindernis im Bereich des geplanten bzw. angesteuerten Bohrkanals detektiert wird.

Obwohl derartige Systeme und ein derartiges Verfahren gute Ergebnisse erzielen, hat sich im Rahmen der Erfindung herausgestellt, dass in bestimmten Fällen die automatische Umsteuerung der Hindernisse bzw. die Notabschaltung der Erdbohrvorrichtung zu "konservativ" ausgelegt ist. Hierdurch kann die Zeit, die zum Einbringen des Bohrkanals benötigt wird, unnötig vergrößert werden.

US 2017/010388 A1 offenbart ein Hindernis-Vermeidungssystem für eine Horizontalbohrmaschine.

Aufgabe der vorliegenden Erfindung ist es demnach, ein Verfahren, ein Computerprogrammprodukt, einen computerlesbaren Datenträger und eine Erdbohrvorrichtung zu schaffen, mit dem bzw. mit der ein schnelleres und/oder optimiertes Einbringen des Bohrkanals im Erdreich ermöglicht werden kann, was einen deutlichen Mehrwert für den Anwender einer Erdbohrvorrichtung bedeuten kann.

Die Aufgabe wird gelöst durch die Gegenstände der unabhängigen Ansprüche. Vorteilhafte Ausführungsformen sind Gegenstand der jeweiligen Unteransprüche und der Beschreibung.

Kerngedanke der Erfindung ist es, einen zunächst widersinnig erscheinenden Ansatz zu verfolgen, dass trotz einer möglichen "Notabschaltung" der Anwender in den Stand versetzt wird, zu entscheiden, ob der Bohrkanal trotz der "Notabschaltung" weiter eingebracht werden soll. Während im Stand der Technik nach einer "Notabschaltung" die Erdbohrvorrichtung aus dem Erdreich "geborgen" wird, kann gemäß der Erfindung ein Anwender entscheiden, ob der geplante Bohrkanal im Erdreich weiter eingebracht werden soll. Dazu ist erfindungsgemäß eine Sicherheitsabfrage in Form einer Quittierung vorgesehen, dass die "Notabschaltung" durch den Anwender zur Kenntnis genommen worden ist, aber durch eine Darstellung von Hindernissen im Bereich des Bohrkanals der Anwender in den Stand versetzt wird, zu entscheiden, ob die weitere Einbringung des Bohrkanals trotz der Abschaltung durch die Steuerung möglich ist. Eine qualifizierte Eingabe in Form einer Quittierung der "Notabschaltung" bzw. Abschaltwarnung kann dazu verwendet werden, das Einbringen des Bohrkanals wieder aufzunehmen bzw. fortzusetzen. Dem Anwender wird eine Entscheidungshilfe in Form der Darstellung der Hindernisse im Erdreich gegeben, die den Anwender in den Stand versetzen kann, eine Entscheidung zu treffen, ob und/oder gegebenenfalls wie ein weiteres Einbringen des Bohrkanals möglich ist.

Die Erfindung schafft ein Verfahren zum Einbringen eines Bohrkanals im Erdreich mittels einer Erdbohrvorrichtung. Die Erdbohrvorrichtung weist einen Bohrkopf auf, der zum Einbringen des Bohrkanals im Erdreich bewegt wird. Das Verfahren umfasst die Schritte: a) Detektieren von Hindernissen vor und/oder neben dem Bohrkopf; b) Anzeigen eines detektierten Hindernis relativ zum Bohrkopf; c) Ausgeben einer Abschaltwarnung, wenn die Entfernung zwischen detektiertem Hindernis und Bohrkopf geringer als ein erster, insbesondere wählbarer, Abstand ist; d) Stoppen des Eindringens des Bohrkanals, wenn eine Abschaltwarnung ausgegeben wird; e) Überprüfen einer Quittierung für ein fortgesetztes Einbringen des Bohrkanals, wenn eine Abschaltwarnung ausgegeben und das Einbringen des Bohrkanals gestoppt wurde; und f) Fortsetzen des Einbringens des Bohrkanals bei einer erfolgreichen Überprüfung der Quittierung.

Der Begriff "Erdreich" im Sinne der Erfindung umfasst insbesondere jede Art von Material, insbesondere Erde, Sand, Fels, Gestein und Mischformen hiervon.

Der Begriff "Bohrkanal" im Sinne der vorliegenden Beschreibung umfasst bestehende oder zu erstellende, vorzugsweise zumindest abschnittsweise horizontale, Kanäle bzw. Bohrungen, insbesondere Erdkanäle einschließlich Erdbohrung, Felsbohrungen o.ä.

Der Begriff "Erdbohrvorrichtung" umfasst im Sinne der Beschreibung eine (und damit jede) Vorrichtung, welche insbesondere einen Gestängeschüsse aufweisenden Bohrstrang in einem bestehenden oder zu erstellenden Kanal, insbesondere im Erdreich, bewegen kann, um eine Bohrung, insbesondere eine Horizontalbohrung (HD), zu erstellen oder aufzuweiten oder Rohrleitungen oder andere lange Körper in das Erdreich einzuziehen. Bei der Erdbohrvorrichtung kann es sich insbesondere um eine HD-Vorrichtung handeln. Eine Erdbohrvorrichtung kann eine einen Bohrstrang antreibende Vorrichtung sein, die insbesondere Erdreich verdrängend arbeiten kann. Der Bohrstrang kann translatorisch und/oder rotatorisch in längsaxialer Richtung des Bohrstrangs in das Erdreich eingebracht werden. Der Bohrstrang kann durch Zug- oder Druckbeaufschlagung und gegebenenfalls auch rotatorisch bzw. drehend im Erdreich bewegt werden. Bei der Erdbohrvorrichtung kann es sich auch um eine "selbstangetriebene Erdbohrvorrichtung" handeln. Bei einer selbstangetriebenen Erdbohrvorrichtung handelt es sich meist um eine als Rammbohrvorrichtung oder Erdrakete bezeichnete Erdbohrvorrichtung. Derartige Erdbohrvorrichtungen arbeiten erdreichverdrängend. Selbstangetriebene Erdbohrvorrichtungen können eine Leitung oder ein Rohr schlagend in das Erdreich einbringen. Die selbstangetriebene Erdbohrvorrichtung weist üblicherweise eine als Meißel ausgestaltete Bohrkopfspitze auf, die in einem Gehäuse angeordnet und von einem Schlagkolben endseitig beaufschlagt werden kann, wobei die Bohrkopfspitze längs beweglich oder fest in dem Gehäuse angeordnet sein kann.

Der Begriff "Bohrkopf" umfasst im Sinne der Beschreibung ein vorderseitiges Element bezogen auf die Vortriebsrichtung, welches ein nach außen gerichtetes bzw. exponiertes Ende der im Erdreich befindlichen Erdbohrvorrichtung ist, welches beim Bohren in Kontakt mit dem Erdreich gelangt. Der Bohrkopf bildet den vorderen Bereich der Erdbohrvorrichtung, der als erstes in Kontakt mit dem Erdreich gelangt.

Der Begriff "Detektieren von Hindernissen" umfasst die Möglichkeit, dass Hindernisse im Erdreich erkannt werden. Die Verwendung des Plurals des Begriffs "Hindernis" drückt aus, dass mehrere Hindernisse detektiert werden können, wobei es natürlich auch möglich ist, dass - insbesondere bei nicht vorhandenem Hindernis bzw. Hindernissen - keines der Hindernisse detektiert wird bzw. nicht detektiert werden kann.

Der Begriff "Hindernis" drückt die Möglichkeit aus, dass eine Detektion erfolgt, die ein Ansprechen bzw. ein Antwortsignal auf ein Detektionssignal darstellt. Wird ein "Hindernis" detektiert, so wird angenommen, dass an der Stelle, an der bzw. für die eine Detektion erfolgt ist, etwas im Erdreich vorhanden sein kann, welches ein Hindernis für einen Bohrkanal darstellen könnte. Der Begriff "Detektion eines Hindernisses" umfasst eine Detektion einer Grenzfläche zwischen dem Erdreich und einem zum Erdreich verschiedenen Material. Der Ort einer Grenzfläche zwischen dem Erdreich und einem um Erdreich verschiedenen Material kann detektiert werden, wobei durch ein voranschreitendes Bewegen des Bohrkopfs im Erdreich Orte von möglichen Grenzflächen detektiert und zu einem "Gesamtbild" von detektierten Hindernissen, welches auch nur ein Hindernis sein kann, im Erdreich entlang des Bohrkanals zusammengeführt werden können.

Insbesondere kann ein "Detektieren von Hindernissen" mittels elektromagnetischer Wellen erreicht werden, indem die Erdbohrvorrichtung elektromagnetische Wellen aussendet, die im Erdreich reflektiert werden können. Die reflektierten Wellen können von der Erdbohrvorrichtung erfasst werden. Es kann vorgesehen sein, dass die elektromagnetischen Wellen Radarwellen sind. Insoweit kann eine Detektion, mittels einer Detektionsvorrichtung, die insbesondere am bzw. im Bohrkopf angeordnet ist, insbesondere bevorzugt eine als Radareinheit ausgestaltete Detektionsvorrichtung, erfolgen. Es kann auch vorgesehen sein, dass mehr als eine Detektionsvorrichtung vorhanden ist. Beispielsweise können am und/oder im Bohrkopf zwei oder mehr Detektionsvorrichtungen vorhanden sein, die in Längsachse des Bohrkopfs beabstandet zueinander angeordnet sind, eine unterschiedliche Reichweite bezüglich der Detektion und/oder unter unterschiedlichen Winkeln Hindernisse detektieren.

Unter dem Begriff "Anzeigen der Position eines detektierten Hindernisses relativ zum Bohrkopf" wird eine Anzeige verstanden, in der dem Anwender die Position des detektierten Hindernis relativ zum Bohrkopf derart angezeigt wird, dass dem Anwender der Abstand des Bohrkopfs zum detektierten Hindernis in mindestens einer Richtung im Raum dargestellt wird. Es ist beispielsweise möglich, dass dem Anwender eine Ansicht des Erdreichs dargestellt wird, in der der Bohrkopf und das bzw. die detektieren Hindernis(se) angezeigt werden.

Der Begriff "Ausgeben einer Abschaltwarnung" umfasst eine Benachrichtigung, die visuell, akustisch und/oder haptisch erfolgen kann. Der Anwender kann über einen der Sinneseindrücke informiert werden, dass eine Abschaltwarnung vorliegt. Der Begriff "Abschaltwarnung" umfasst eine Warnung, mit der dem Anwender mitgeteilt wird, dass ein Mindestabstand zum Hindernis bei der Erstellung des Bohrkanals nicht eingehalten wird bzw. nicht eingehalten werden kann.

Die Erfindung kann auch durch ein freies Wählen des Werts für den ersten Abstands dem Anwender einen Mehrwert verschaffen, da bisherige Überlegungen immer von einem fest vorgegebenen Mindestabstand zum Bohrkopf und/oder dem Bohrkanal ausgegangen sind. Im Rahmen der Erfindung wurde erkannt, dass der erste Abstand bedarfsmäßig festgelegt werden kann. Dieses bedarfsmäßige Festlegen widerspricht zunächst dem bisherigen Sicherheitsverständnis, das genau einen Mindestabstand vorsah, eröffnet aber paradoxerweise dem Anwender eine erhöhte Sicherheit, da beispielsweise beim Erstellen einer Pilotbohrung schon der Durchmesser einer im Anschluss an die Pilotbohrung durchzuführenden Aufweitbohrung berücksichtigt werden kann. In Ergänzung des Kerngedankens der Erfindung kann mittels eines frei wählbaren Abstands schon bei der Pilotbohrung erkannt werden, ob eine Aufweitbohrung mit einem Aufweitkopf mit größerem Durchmesser als dem Bohrkopf der Pilotbohrung in den Bereich von Hindernissen gelangt.

Durch die Berücksichtigung eines frei wählbaren ersten Abstands kann ein schnelleres Einbringen des Bohrkanals ermöglicht werden, da schon die Pilotbohrung "korrigiert" werden kann.

Der Begriff "erster Abstand" bezeichnet einen Abstand in Form einer Länge. Die Länge des ersten Abstands kann vorgewählt werden. Die Einstellung bzw. Vorwahl der Länge kann mittels einer Eingabe des Anwenders oder einer Person einer ausgewählten Personengruppe, die dazu autorisiert ist, erfolgen.

Das Ausgeben und/oder Anzeigen kann an einem die Erdbohrvorrichtung steuernden Führerstand und/oder einer Antriebseinheit erfolgen. Es kann vorgesehen sein, dass die Ausgabe und/oder Anzeige auf einer vom Anwender mitführbaren Einrichtung erfolgt. Es besteht die Möglichkeit, dass ein Ausgeben und/oder Anzeigen die Übermittlung eines Signals umfasst, welches einer zentralen Einheit und/oder einem Element in einem Netzwerk mitgeteilt wird. Der Empfang des Signals kann von der zentralen Einheit und/oder dem Element in dem Netzwerk mitgeteilt werden und/oder kann von der zentralen Einheit und/oder dem Element in dem Netzwerk abgerufen werden. Die Ausgabe und/oder Anzeige kann in eine Cloud hochgeladen werden, so dass diese an einem beliebigen Ort angesehen werden kann.

Der Begriff "Stoppen des Einbringens des Bohrkanals" umfasst im Sinne der Beschreibung ein Stoppen des Einbringens des Bohrkanals, indem beispielsweise i) der Vortrieb der Erdbohrvorrichtung unterbunden, ii) die Erdbohrvorrichtung ausgeschaltet und/oder iii) die Erdbohrvorrichtung in einen Standby-Modus gebracht wird, in dem die Erdbohrvorrichtung zwar noch eingeschaltet ist, aber kein Vortrieb erfolgt.

Der Begriff "Quittierung" umfasst im Sinne der Beschreibung eine Eingabe durch einen Anwender, anhand derer festgestellt werden kann, dass ein Anwender auf die angezeigte Abschaltwarnung derart reagiert hat, dass er diese zur Kenntnis nehmen musste oder gebilligt hat. Eine "Quittierung" kann eine qualifizierte Eingabe sein, die nicht zufällig, unachtsam und/oder unbeabsichtigt erfolgen kann. Es kann einer Eingabe eines Anwenders bedürfen, die mehr als einen einzelnen Tastendruck erfordert.

Das fortgesetzte Einbringen des Bohrkanals bzw. die Wiederaufnahme des Einbringens des Bohrkanals kann lediglich bei erfolgreicher Überprüfung der Quittierung erfolgen, sodass eine Hürde für das fortgesetzte Einbringen des Bohrkanals erreicht werden kann, und kein unbeabsichtigtes Wiederanfahren der Erdbohrvorrichtung nach einer Abschaltwarnung möglich sein kann.

In einer bevorzugten Ausführungsform umfasst der Begriff "Vorwarnung", dass beim Detektieren von Hindernissen vor und/oder neben dem Bohrkopf festgestellt wurde bzw. wird, dass eine Entfernung zwischen detektiertem Hindernis und Bohrkopf geringer als ein zweiter Abstand ist. Der Wert für den zweiten Abstand bzw. die Längenangabe für den zweiten Abstand kann von dem Anwender oder einer Personengruppe, die hierfür autorisiert ist, festgelegt werden. Der Sinn der Ausgabe einer Vorwarnung ist, dass der Anwender informiert wird bzw. ist, dass sich der Bohrkopf einem Hindernis derart nähern kann, dass es im weiteren Verlauf der Erstellung des Bohrkanals einen kritischen Zustand geben kann; der Anwender kann "vorgewarnt" werden. Es kann alternativ oder zusätzlich vorgesehen sein, dass ein behördlicher Mindestabstand zu einem Hindernis vorgegeben werden kann, dessen Einhaltung berücksichtigt werden muss.

Üblicherweise kann der erste Abstand größer gewählt sein als der zweite Abstand. Es kann jedoch auch der Fall eintreten, dass die Vorwarnung auf einen Mindestabstand eines Bohrkanals abstellt, bei dem noch eine Aufweitbohrung durchzuführen ist. Dann könnte der erste Abstand kleiner gewählt sein als der zweite Abstand, der den gewünschten Abstand zwischen Hindernis und ("aufgeweitetem") Bohrkanal festlegen kann. Durch die Eingabe der Abstände, kann eine hohe Flexibilität beim Einbringen des Bohrkanals sichergestellt werden.

Es kann auch vorgesehen sein, dass ein weiterer dritter Abstand berücksichtigt wird. Beispielsweise kann der erste Abstand den notwendigen Abstand angeben, mit dem die Erstellung des Bohrkanals technisch möglich ist (ohne Kontakt oder Kollision mit den Hindernissen); der zweite Abstand kann einen behördlichen Mindestabstand zwischen Bohrkanal und Hindernis betreffen; und der dritte Abstand kann einem Abstand für eine Vorwarnung entsprechen.

In einer bevorzugten Ausführungsform umfasst die Anzeige der Position eines detektierten Hindernisses relativ zum Bohrkopf eine Anzeige von mehreren Ansichten. Mehrere Ansichten kann im Sinne der Beschreibung bedeuten, dass dem Anwender die Position von einem oder mehreren detektieren Hindernissen relativ zum Bohrkopf in mehreren, insbesondere in einem Winkel zueinander ausgerichteten bzw. angeordneten, Ansichten angezeigt werden kann. Insbesondere kann ein Winkel zwischen den Ansichten vorliegen, der im Wesentlichen gleich oder nahe 90° in einer Raumrichtung sein kann. Die Ansichten können ein Abbild in einer Richtung des Erdreichs sein, wobei sowohl der Bohrkopf als auch die bzw. das detektierte Hindernis angezeigt werden können. Eine Anzeige des Bohrkopfs an sich kann auch entfallen, wenn beispielsweise der Bohrkopfs als mittig in einer Anzeige bzw. Ansicht angenommen wird. Es kann eine schematische Darstellung eines oder mehrerer Hindernisse erreicht werden. In einer Anzeige kann der Bohrkopf als Punkt oder Kreuz, insbesondere mit einer dem Durchmesser des Bohrkopfs entsprechenden Ausdehnung dargestellt werden. Die Darstellung eines oder mehrerer detektierter Hindernisse kann insbesondere eine komplette Darstellung der detektierten Grenzflächen zwischen Erdreich und einem vom Erdreich verschiedenen Material sein.

In einer besonders bevorzugten Ausführungsform können die mehreren Ansichten eine Seitenansicht, eine Aufsicht und/oder eine Ansicht entlang der Längsachse des Bohrkanals umfassen. Es kann vorgesehen sein, dass bei einer bildlichen Darstellung der Maßstab oder eine zum Maßstab korrespondierende Information in der Abbildung bzw. an der Abbildung vorhanden ist bzw. dargestellt wird.

In einer bevorzugten Ausführungsform umfasst die Anzeige der Position eines detektierten Hindernisses relativ zum Bohrkopf eine Anzeige einer zumindest zweidimensionalen Ausdehnung eines detektierten Hindernisses, welcher sich insbesondere dadurch ergeben kann, dass die detektierten Orte von Grenzflächen zwischen dem Erdreich und einem vom Erdreich verschiedenen Material zweidimensional dargestellt werden. Hierdurch wird dem Anwender nicht nur ein Abstand zu einem Hindernis mitgeteilt, sondern auch eine Kontur möglicher Hindernisse, sodass der Anwender in den Stand versetzt wird, über eine Quittierung zu entscheiden, beispielsweise weil ein Fehler bei der Detektion des Hindernisses vorliegt oder der Anwender entscheiden kann, um welche Art von Hindernis es sich handeln kann. Beispielsweise kann mittels der Anzeige einer zumindest zweidimensionalen Ausdehnung eines detektierten Hindernisses ein Rohr oder eine Leitung als solche möglicherweise identifiziert werden.

In einer bevorzugten Ausführungsform erfolgt die Quittierung mittels einer alphanumerischen Eingabe, einer Schlüsseleingabe und/oder einer Betätigung eines oder mehrerer Betätigungselemente. Es besteht auch die Möglichkeit über ein externes (z.B. mobiles) Gerät (z.B. durch einen Supervisor) eine Quittierung durchführen zu lassen, nach dem dieser bspw. über eine Cloud oder über eine SMS etc. eine Abschaltwarnung erhalten hat. Hierdurch kann die Höhe der Hürde für eine unbeabsichtigte Quittierung festgelegt werden. Beispielsweise ist die notwendige alphanumerische Eingabe zur Quittierung nur bestimmten Anwendern bekannt bzw. wird nur diesen bekannt, wobei die Möglichkeit besteht, dass die alphanumerische Eingabe an Dritte ohne eine Protokollierung und/oder dass dieses nachvollziehbar ist weitergegeben werden kann. Es kann vorgesehen sein, dass unterschiedlichen Anwendern oder unterschiedlichen Anwendergruppen eine alphanumerische Eingabe zugeordnet ist, sodass protokolliert werden kann, welcher Anwender bzw. welcher Anwendergruppe die Quittierung in Form der alphanumerischen Eingabe erteilt hat. Ähnliches gilt für einen mechanischen oder elektromagnetischen Schlüssel (bspw. eine Codekarte), der einem bestimmten Anwender oder einer Anwendergruppe ausgehändigt sein kann. Ebenso kann es sich mit einer Betätigung eines oder mehrerer Betätigungselemente verhalten, die beispielsweise in einer bestimmten Reihenfolge betätigt werden müssen. Bei der Betätigung mehrerer Betätigungselemente kann es auch vorgesehen sein, dass die Betätigungselemente zumindest teilweise gleichzeitig betätigt werden müssen. Die Art und Weise der Betätigung mehrerer Betätigungselemente kann wiederum nur einem bestimmten Anwender bzw. einer Anwendergruppe mitgeteilt werden, sodass auch hier nachvollzogen bzw. protokolliert werden kann, welcher Anwender oder welche Anwendergruppe die Quittierung durchgeführt hat.

Wie oben ausgeführt kann die Höhe der Hürde für eine unbeabsichtigte Quittierung festgelegt werden. In Übereinstimmung mit der oben genannten beispielhaften Quittierung kann auch eine biometrische Eingabe für die Quittierung zusätzlich oder alternativ möglich sein, wobei die biometrische Eingabe einer Schlüsseleingabe entsprechen kann. Es kann beispielsweise möglich sein, einen Fingerabdruck, ein Gesicht oder eine Iris zu erkennen, wobei ein entsprechendes Lesegerät bzw. Eingabegerät vorhanden sein kann. Die Schlüsseleingabe und die biometrische Eingabe können als eine Quittierung mittels eines Codes, der sich im Besitz befindet, angesehen werden.

Es kann vorgesehen sein, dass analog zur genannten beispielhaften alphanumerischen Eingabe ein Muster oder eine grafische Strichfolge alternativ oder zusätzlich eingegeben werden kann, wobei die Eingabe eines Musters oder einer grafischer Strichfolge der Eingabe einer alphanumerischen Eingabe analog entsprechen kann. Die alphanumerische Eingabe und die Eingabe eines Musters bzw. einer grafischen Strichfolge kann als Quittierung mittels eines Codes, der einem bekannt gemacht wurde (Aspekt "Wissen"), angesehen werden.

Es ist auch alternativ oder zusätzlich möglich, dass einem Bildlesegerät ein Bildcode präsentiert wird, um eine Quittierung auszulösen, was analog einer Schlüsseleingabe angesehen werden kann. Auch die Bildeingabe bzw. die Eingabe eines Bildcodes kann als Quittierung mittels des Aspekts "Besitz" angesehen werden.

In einer bevorzugten Ausführungsform wird ein Protokoll der Anzeige der Position eines detektierten Hindernisses relativ zum Bohrkopf und/oder Ausgabe von Vorwarnung und/oder Abschaltwarnung und/oder Quittierung erstellt. Da es sich bei dem Fortsetzen bzw. Wiederaufnehmen des Einbringens des Bohrkanals nach einer Abschaltwarnung um einen kritischen Vorgang handelt, kann es vorgesehen und wünschenswert sein, ein Protokoll über die Erstellung des Bohrkanals mit eventuell auftretenden Warnungen und/oder einer Quittierung zu erstellen, damit auch eine technische Fehlfunktionen erkannt werden können.

Es kann auch die Möglichkeit vorgesehen sein, das Protokoll einer Erstellung eines Bohrkanals abzuspeichern, wenn keine Abschalt- und/oder Vorwarnung aufgetreten sind. Beispielsweise kann eine Tabelle abgespeichert werden, in der den Längenwerten des Bohrkanals Daten zu Hindernissen zugeordnet sein können. Beispielsweise kann einer Länge des Bohrkanals die jeweiligen Polarkoordinaten von Hindernissen zugeordnet sein.

In einer bevorzugten Ausführungsform kann der Bohrkopf im Erdreich nach einer Abschaltwarnung zurückbewegt werden, und das Protokoll genutzt werden, mindestens ein detektiertes Hindernis zu umgehen. Hierdurch kann eine zumindest teilweise automatische Ausgestaltung erreicht werden, indem dem Anwender die Daten des Protokolls zur Verfügung gestellt werden können, um den Bohrkopf um das oder die Hindernisse zu bewegen. In einer besonders bevorzugten Ausführungsform kann eine weitestgehend automatische Rückbewegung und ein neuerlicher Vortrieb des Bohrkopfs ausgeführt werden.

In einer bevorzugten Ausführungsform wird bei einer nicht erfolgreichen Überprüfung der Quittierung die Erdbohrvorrichtung über eine Distanz rückwärts aus dem Erdreich bewegt und ein Ausrichten der Erdbohrvorrichtung in Abhängigkeit von dem oder den detektieren Hindernissen durchgeführt. Es kann vorgesehen sein, dass das rückwärtige Bewegen derart ausgeführt wird, dass der Bohrkopf im Erdreich verbleibt. Der Bohrkopf kann dann im Erdreich angesteuert werden, um das oder die Hindernisse zu umgehen. Das Ausrichten kann insbesondere interaktiv durchgeführt werden.

Es kann auch vorgesehen sein, dass der Bohrkopf vollständig aus dem Erdreich zurückgeholt wird. Dann besteht die Möglichkeit, den Bohrkopf bzw. die Erdvorrichtung auf der Lafette auszurichten und der sich ergebende Bohrkanal kann mit der Position der detektierten Hindernisse bzw. der Position des detektierten Hindernisses in Relation gesetzt werden.

Aufgrund der dem Anwender zur Verfügung gestellten Informationen über ein oder mehrere Hindernisse im Erdreich entlang des Bohrkanals, bspw. in Form der Protokollierung, die die Position des Bohrkopfs beim "nicht erfolgreichen Einbringen des Bohrkanals" relativ zu Hindernissen betrifft, kann eine verbesserte Ausrichtung der Erdbohrvorrichtung erfolgen, die - obwohl das Einbringen des Bohrkanals in einem "ersten Versuch" gescheitert ist - beschleunigt erfolgen kann. Die Erdbohrvorrichtung kann so ausgerichtet werden, dass eine potenzielle Gefahrenquelle im Erdreich in Form des oder der detektierten Hindernisse außerhalb des einzubringenden Bohrkanals liegt. Ein Einbringen des Bohrkanals kann in einem "zweiten Versuch" möglich werden, indem die Lafette entsprechend ausgerichtet werden kann. Ist. Es kann vorgesehen sein, dass dem Anwender eine Information zur Verfügung gestellt wird, wie er die Lafette ausrichten muss, um den sich durch die Ausrichtung der Lafette ergebenden Bohrkanal von den im Erdreich zuvor detektierten Hindernissen mit ausreichendem Abstand einzubringen.

In einer bevorzugten Ausführungsform wird das Verfahren teilweise oder vollständig auf einem Computer ausgeführt. Es ist möglich, dass der Anwender nur noch die Quittierung geben, die Quittierung verweigern und/oder eine mögliche Ausrichtung der Lafette vornehmen muss. Es kann auch vorgesehen sein, dass die Lafette automatisch in Kenntnis der detektierten Hindernisse ausgerichtet wird.

Die Erfindung schafft auch ein Computerprogrammprodukt, welches Befehle umfasst, die bei der Ausführung des Programms durch einen Computer diesen veranlassen, ein vorliegend beschriebenes Verfahren durchzuführen.

Die Erfindung schafft auch einen computerlesbaren Datenträger, auf dem das vorgeschriebene Computerprogrammprodukt gespeichert ist.

Da Erdbohrvorrichtungen zur Steuerung derselben Computer aufweisen, kann das Verfahren gemäß der vorliegenden Erfindung mittels eines Einspeisens eines Computerprogramms in den Computer der Erdbohrvorrichtung bei Bedarf durchgeführt werden. Beispielsweise ist es möglich, dass eine Erdbohrvorrichtung mit der vorliegenden Erfindung, bspw. in Form eines Computerprogrammprodukts, welches auf dem Computer der Erdbohrvorrichtung ausgeführt wird und/oder eines computerlesbaren Datenträgers, der vom Computer der Erdbohrvorrichtung ausgelesen wird, um ein entsprechendes Programm bzw. Verfahren auszuführen, "ertüchtigt" wird und dem Anwender einen Mehrwert liefert.

Die Erfindung schafft auch eine Erdbohrvorrichtung zum Einbringen eines Bohrkanals im Erdreich, wobei die Erdbohrvorrichtung einen Bohrkopf aufweist, der zum Einbringen des Bohrkanals im Erdreich bewegt wird. Der Bohrkopf weist eine Einrichtung zum Detektieren von Hindernissen vor und/oder neben dem Bohrkopf auf, wobei die Erdbohrvorrichtung ausgestaltet ist, die Position eines detektierten Hindernisses relativ zum Bohrkopf anzuzeigen. Eine Abschaltwarnung wird ausgegeben, wenn die Entfernung zwischen detektiertem Hindernis und Bohrkopf geringer als ein erster, insbesondere wählbarer, Abstand ist. Die Erdbohrvorrichtung ist ferner ausgestaltet, das Einbringen des Bohrkanals zu stoppen, wenn eine Abschaltwarnung ausgegeben wird. Es ist eine Eingabe für eine Quittierung für eine Wiederaufnahme des Einbringens des Bohrkanals vorgesehen, wobei bei einer erfolgreichen Überprüfung der Quittierung die Erdbohrvorrichtung ausgestaltet ist, das Einbringen des Bohrkanals wieder aufzunehmen.

In einer bevorzugten Ausführungsform ist eine Anzeigevorrichtung vorgesehen, die für die Anzeige der Position eines detektierten Hindernisses relativ zum Bohrkopf ausgestaltet ist und eine Anzeige von mehreren Ansichten umfasst.

In einer bevorzugten Ausführungsform ist für die Quittierung eine alphanumerische Eingabe, eine Schlüsseleingabe und/oder ein Betätigungselement oder mehrere Betätigungselemente vorgesehen.

In einer bevorzugten Ausführungsform ist ein, insbesondere nicht flüchtiger, Speicher vorhanden, in dem ein Protokoll der Anzeige der Position eines detektierten Hindernisses relativ zum Bohrkopf und/oder der Ausgabe von Vorwarnung und/oder Abschaltwarnung gespeichert wird.

Die Erfindung wird hinsichtlich mehrerer Aspekte beschrieben, die ein Verfahren, ein Computerprogrammprodukt, einen computerlesbaren Datenträger und eine Erdbohrvorrichtung betreffen. Die Ausführungen zu den einzelnen Aspekten ergänzen einander, sodass insbesondere die Ausführungen zum Verfahren als Ausführungen der Beschreibung für die Erdbohrvorrichtung zu verstehen sind. Mit der Beschreibung des Verfahrens sind auch für die Erdbohrvorrichtung vorrichtungsseitige Merkmale bzw. systemseitige Merkmale beschrieben bzw. offenbart und umgekehrt, sodass mit der Beschreibung der Erdbohrvorrichtung auch Handlungen im Sinne des Verfahrens bzw. einzelner Verfahrensschritte des Verfahrens offenbart sind.

Der Begriff "aufweisen" umfasst im Sinne der Beschreibung sowohl den dem Begriff innewohnenden Bedeutungsinhalt, dass weitere Elemente neben den genannten Elementen vorgesehen sein können (nicht abschließende Aufzählung), aber auch dem Bedeutungsinhalt, dass der Begriff "aufweisen" synonym für "bestehen aus" bzw. "gebildet aus" verwendet wird.

Die vorstehenden Ausführungen stellen ebenso wie die nachfolgende Beschreibung beispielhafter Ausführungsformen keinen Verzicht auf bestimmte Ausführungsformen oder Merkmale dar.

Die Erfindung wird nachfolgend anhand von einem in der Zeichnung dargestellten Ausführungsbeispiel näher erläutert.

In den Zeichnungen zeigt:
- Fig. 1: eine Anzeige für einen Anwender, mit der ein erster Abstand und ein zweiter Abstand gewählt werden können;
- Fig. 2: eine Anzeige für einen Anwender beim Einbringen eines Bohrkanals mit drei Ansichten, die eine Seitenansicht, eine Ansicht in Richtung der Längsachse der Erdbohrvorrichtung (eine Ebene quer zur Längsachse des Bohrkopfs) und eine Draufsicht umfassen, wobei eine Abschaltwarnung ausgegeben wurde;
- Fig. 3: eine Anzeige für einen Anwender nach dem Einbringen eines Bohrkanals als Darstellung für ein Protokoll; und
- Fig. 4: eine Anzeige eines Protokolls, bei dem für eine bestimmte Position des Bohrkopfs in einem erstellten Bohrkanal die Ansichten und Warnungen für den Anwender dargestellt werden.

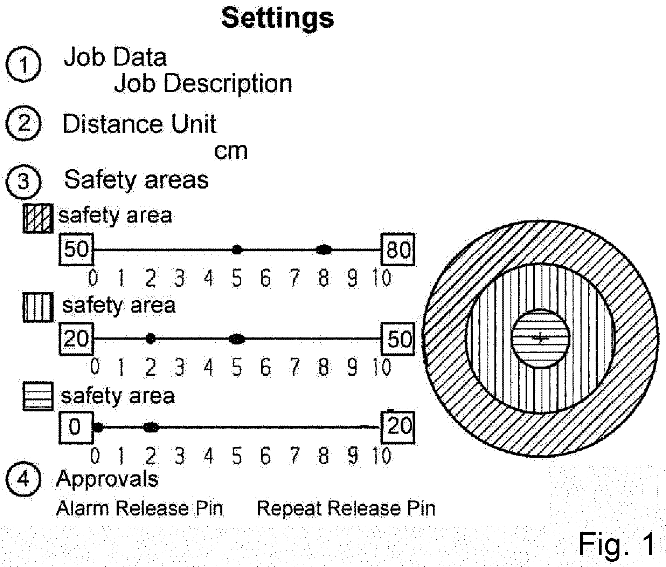

Fig. 1 zeigt eine Darstellung für den Anwender einer Erdbohrvorrichtung, in der ein erster Abstand (waagerechte Schraffur) für eine Abschaltwarnung und ein zweiter Abstand (senkrechte Schraffur) für eine Vorwarnung gewählt sind. Der erste Abstand ist kleiner gewählt als der zweite Abstand.

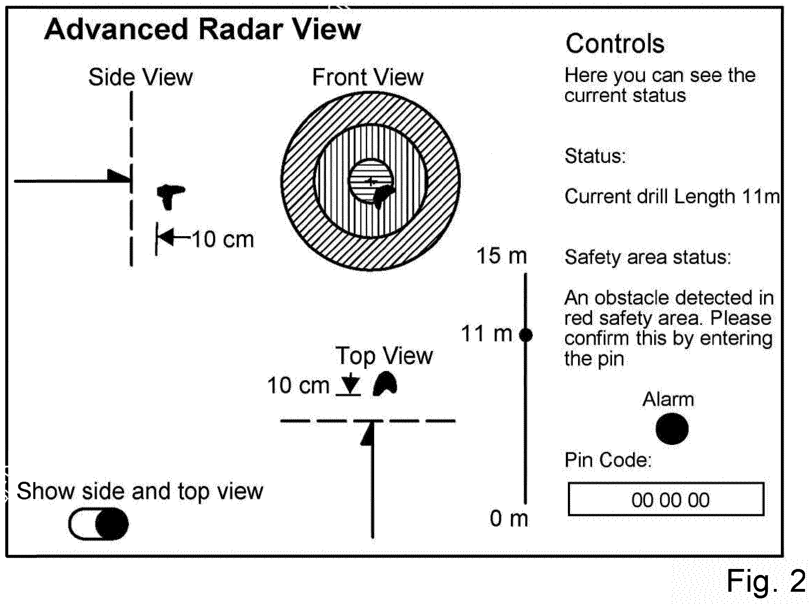

Fig. 2 zeigt eine Ansicht für einen Anwender beim Erstellen des Bohrkanals mit drei Ansichten, die eine Seitenansicht, eine Ansicht in Richtung der Längsachse des Bohrkopfs (eine Ebene quer zur Längsachse des Bohrkopfs) und eine Draufsicht umfassen, wobei eine Abschaltwarnung ausgegeben wurde. Es wurde ein Hindernis erkannt. Das detektierte Hindernis ist weniger als die Länge des ersten Abstands vom Bohrkopf entfernt, so dass eine Abschaltwarnung ausgegeben wird und der Vortrieb des Bohrkopfs gestoppt wird.

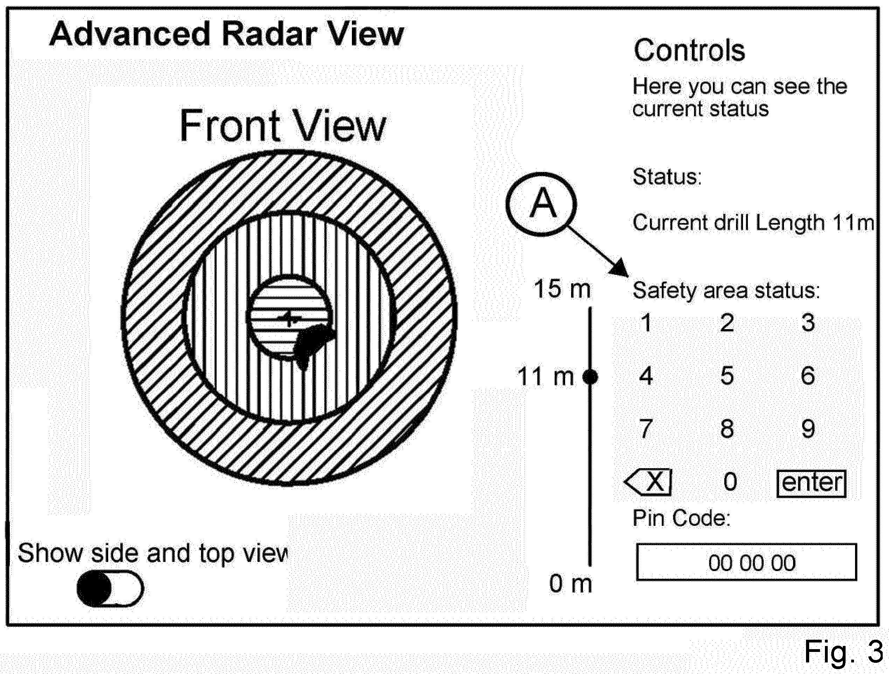

Fig. 3 zeigt in dem mit dem A im Kreis bezeichneten Bereich eine Möglichkeit, eine Quittierung in Form einer PIN-Eingabe vorzunehmen, um den Bohrbetrieb wieder aufzunehmen und die Erdbohrvorrichtung wieder zu starten.

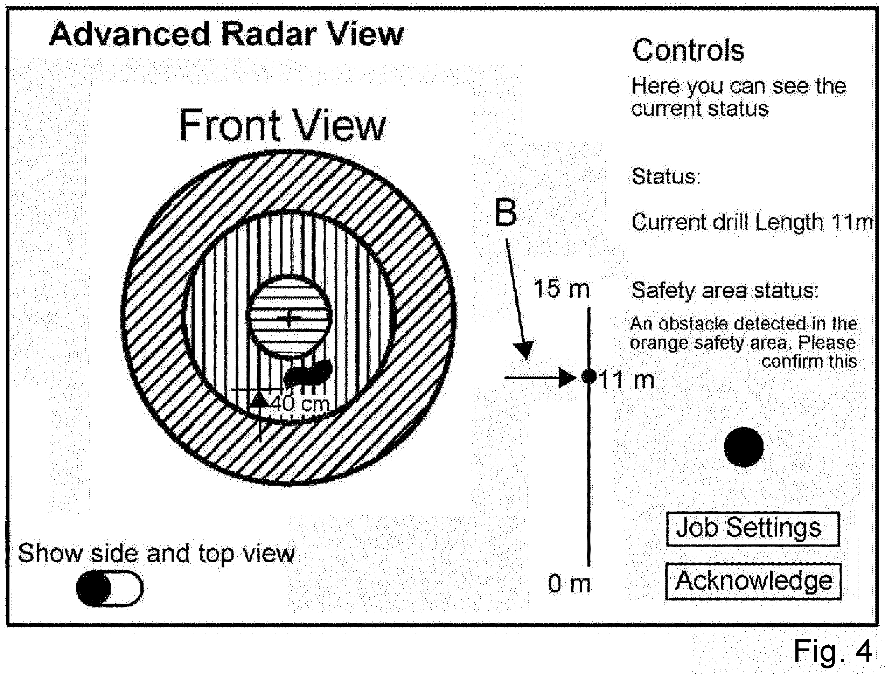

Fig. 4 zeigt eine Ansicht eines Teils eines Protokolls, welches während des Einbringens des Bohrkanals in das Erdreich aufgenommen wurde. Der mit B im Kreis bezeichnete Pfeil gibt die Länge bzw. Position des Bohrkopfs im Bohrkanal an und es werden die Ansichten gezeigt, die dem Anwender während der Erstellung des Bohrkopfs dargestellt wurden. Der Anwender kann das zu der Erstellung des Bohrkanals gespeicherte Protokoll abfahren, indem der Anwender den die Länge bzw. Position des Bohrkopfs angebenden Punkt im Bohrkanal auf der senkrechten Linie (tatsächlich gebohrte Länge des erstellten Bohrkanals) bewegt.

## Patentansprüche

1. Verfahren zum Einbringen eines Bohrkanals im Erdreich mittels einer Erdbohrvorrichtung, wobei die Erdbohrvorrichtung einen Bohrkopf aufweist, der zum Einbringen des Bohrkanals im Erdreich bewegt wird, und das Verfahren die Schritte umfasst:
a) Detektieren von Hindernissen vor und/oder neben dem Bohrkopf;
b) Anzeigen der Position eines detektierten Hindernisses relativ zum Bohrkopf;
c) Ausgeben einer Abschaltwarnung, wenn die Entfernung zwischen detektiertem Hindernis und Bohrkopf geringer als ein erster, insbesondere wählbarer, Abstand ist;
d) Stoppen des Einbringens des Bohrkanals, wenn eine Abschaltwarnung ausgegeben wird;
e) Überprüfen einer Sicherheitsabfrage in Form einer Quittierung der ausgegebenen Abschaltwarnung; und
f) Fortsetzen des Einbringens des Bohrkanals bei einer erfolgreichen Überprüfung der Quittierung.

2. Verfahren nach Anspruch 1, wobei eine Vorwarnung ausgegeben wird, wenn die Entfernung zwischen detektiertem Hindernis und Bohrkopf geringer als ein zweiter Abstand ist, wobei der zweite Abstand insbesondere größer als der erste Abstand ist.

3. Verfahren nach Anspruch 1 oder 2, wobei die Anzeige der Position eines detektierten Hindernisses relativ zum Bohrkopf eine Anzeige von mehreren Ansichten umfasst.

4. Verfahren nach einem der Ansprüche 1 bis 3, wobei die Anzeige der Position eines detektierten Hindernisses relativ zum Bohrkopf eine Anzeige einer zumindest zweidimensionalen Ausdehnung eines detektierten Hindernisses umfasst.

5. Verfahren nach einem der Ansprüche 1 bis 4, wobei die Quittierung mittels einer alphanumerischen Eingabe, einer Schlüsseleingabe und/oder einer Betätigung eines oder mehrerer Betätigungselemente erfolgt.

6. Verfahren nach einem der Ansprüche 1 bis 5, wobei ein Protokoll der Anzeige der Position eines detektierten Hindernisses relativ zum Bohrkopf und/oder Ausgabe von Vorwarnung und/oder Abschaltwarnung und/oder Quittierung erstellt wird.

7. Verfahren nach Anspruch 6, wobei der Bohrkopf im Erdreich nach einer Abschaltwarnung zurückbewegt wird, und das Protokoll genutzt wird, mindestens ein detektiertes Hindernis zu umgehen.

8. Verfahren nach einem der Ansprüche 1 bis 7, wobei das Verfahren auf einem Computer ausgeführt wird.

9. Computerprogrammprodukt umfassend Befehle, die bei der Ausführung des Programms durch einen Computer diesen veranlassen, mit einer Erdbohrvorrichtung zum Einbringen eines Bohrkanals im Erdreich ein Verfahren nach einem der Ansprüche 1 bis 7 durchzuführen.

10. Computerlesbarer Datenträger, auf dem das Computerprogrammprodukt nach Anspruch 9 gespeichert ist und der vom Computer einer Erdbohrvorrichtung auslesbar ist, um das Verfahren nach einem der Ansprüche 1 bis 7 durchzuführen.

11. Erdbohrvorrichtung zum Einbringen eines Bohrkanals im Erdreich, wobei die Erdbohrvorrichtung einen Bohrkopf aufweist, der zum Einbringen des Bohrkanals im Erdreich bewegt wird und eine Einrichtung zum Detektieren von Hindernissen vor und/oder neben dem Bohrkopf aufweist, wobei die Erdbohrvorrichtung ausgestaltet ist, die Position eines detektierten Hindernisses relativ zum Bohrkopf anzuzeigen sowie eine Vorwarnung und/oder Abschaltwarnung auszugeben, wobei die Vorwarnung ausgegeben wird, wenn die Entfernung zwischen detektiertem Hindernis und Bohrkopf geringer als ein erster Abstand ist, und die Abschaltwarnung ausgegeben wird, wenn die Entfernung zwischen detektiertem Hindernis und Bohrkopf geringer als ein zweiter Abstand ist, wobei der erste Abstand größer als der zweite Abstand ist, und die Erdbohrvorrichtung ferner ausgestaltet ist, das Einbringen des Bohrkanals zu stoppen, wenn eine Abschaltwarnung ausgegeben wird, wobei eine Eingabe als Sicherheitsabfrage in Form einer Quittierung der ausgegebenen Abschaltwarnung vorgesehen ist, und bei einer erfolgreichen Überprüfung der Quittierung die Erdbohrvorrichtung ausgestaltet ist, das Einbringen des Bohrkanals wiederaufzunehmen.

12. Erdbohrvorrichtung nach Anspruch 11, wobei eine Anzeigevorrichtung vorgesehen ist, die für die Anzeige der Position eines detektierten Hindernisses relativ zum Bohrkopf ausgestaltet ist und eine Anzeige von mehreren Ansichten umfasst.

13. Erdbohrvorrichtung nach Anspruch 11 oder 12, wobei für die Quittierung eine alphanumerische Eingabe, eine Schlüsseleingabe und/oder ein oder mehrere Betätigungselemente vorgesehen sind.

14. Erdbohrvorrichtung nach einem der Ansprüche 11 bis 13, wobei ein Speicher vorhanden ist, in den ein Protokoll der Anzeige der Position eines detektierten Hindernisses relativ zum Bohrkopf und/oder der Ausgabe von Vorwarnung und/oder Abschaltwarnung gespeichert wird.

15. Erdbohrvorrichtung nach Anspruch 14, wobei eine Steuerung vorhanden ist, mittels derer der Bohrkopf zumindest teilweise zurückbewegt und/oder ausgerichtet zum Umgehen des mindestens einen Hindernis vorangetrieben wird.

## Claims

1. Method for inserting a drilling channel in the soil by means of a ground drilling device, wherein the ground drilling device has a drilling head that is moved to insert the drilling channel in the soil and the method comprises the steps:
a) detecting obstacles in front of and/or next to the drilling head;
b) displaying the position of a detected obstacle relative to the drilling head;
c) issuing a shutdown warning if the distance between the detected obstacle and the drilling head is less than a first, in particular selectable, distance;
d) stopping the insertion of the drilling channel when a shutdown warning is issued;
e) checking a safety query in the form of an acknowledgement of the issued shutdown warning; and
f) resuming the insertion of the drilling channel upon a successful checking of the acknowledgement.

2. Method according to claim 1, wherein an alert is issued if the distance between the detected obstacle and the drilling head is less than a second distance, wherein the second distance is, in particular, greater than the first distance.

3. Method according to claim 1 or 2, wherein the display of the position of a detected obstacle relative to the drilling head comprises a display of a plurality of views.

4. Method according to one of claims 1 to 3, wherein the display of the position of a detected obstacle relative to the drilling head comprises a display of an at least two-dimensional extent of a detected obstacle.

5. Method according to one of claims 1 to 4, wherein the acknowledgement is made by means of an alphanumeric input, a key input, and/or an actuation of one or more actuation elements.

6. Method according to one of claims 1 to 5, wherein a log of the display of the position of a detected obstacle relative to the drilling head and/or issue of an alert and/or shutdown warning and/or acknowledgement is generated.

7. Method according to claim 6, wherein the drilling head is moved back in the soil after a shutdown warning, and the log is used to bypass at least one detected obstacle.

8. Method according to one of claims 1 to 7, wherein the method is performed on a computer.

9. Computer program product comprising commands which, when the program is run by a computer, cause the computer to carry out a method according to one of claims 1 to 7 with a ground drilling device for insertion a drilling channel in the soil.

10. A computer-readable data carrier on which the computer program product according to claim 9 is stored and that is readable by the computer of a ground drilling device in order to carry out the method according to one of claims 1 to 7.

11. Ground drilling device for inserting a drilling channel in the soil, wherein the ground drilling device has a drilling head that is moved to insert the drilling channel in the soil and has equipment for detecting obstacles in front of and/or next to the drilling head, wherein the ground drilling device is designed to indicate the position of a detected obstacle relative to the drilling head and to issue an alert and/or a shutdown warning, wherein the alert is issued if the distance between the detected obstacle and the drilling head is less than a first distance, and the shutdown warning is issued if the distance between the detected obstacle and the drilling head is less than a second distance, wherein the first distance is greater than the second distance, and the ground drilling device is further designed to stop the insertion of the drilling channel when a shutdown warning is issued, wherein an input is provided as a safety query in the form of an acknowledgement of the issued shutdown warning, and if the acknowledgement is successfully checked, the ground drilling device is designed to resume insertion of the drilling channel.

12. Ground drilling device according to claim 11, wherein a display device is provided, which is designed to display the position of a detected obstacle relative to the drilling head and comprises a display of a plurality of views.

13. Ground drilling device according to claim 11 or 12, wherein an alphanumeric input, a key input and/or one or more actuating elements are provided for the acknowledgement.

14. Ground drilling device according to one of claims 11 to 13, wherein a memory is available in which a log of the display of the position of a detected obstacle relative to the drilling head and/or the issue of an alert and/or shutdown warning is stored.

15. Ground drilling device according to claim 14, wherein a controller is available by means of which the drilling head is at least partially moved back and/or pushed forward in an alignment that allows it to bypass the at least one obstacle.

## Revendications

1. Procédé d'introduction d'un canal de forage dans le sol au moyen d'un dispositif de forage du sol, le dispositif de forage du sol comportant une tête de forage qui est déplacée pour introduire le canal de forage dans le sol, le procédé comprenant les étapes suivantes :
a) Détection d'obstacles devant et/ou à côté de la tête de forage ;
b) Indication de la position d'un obstacle détecté par rapport à la tête de forage ;
c) Émission d'un avertissement d'arrêt lorsque la distance entre l'obstacle détecté et la tête de forage est inférieure à une première distance, en particulier sélectionnable ;
d) Arrêt de l'introduction du canal de forage lorsqu'un avertissement d'arrêt est émis ;
e) Vérification d'une demande de sécurité sous la forme d'une validation de l'avertissement d'arrêt émis ; et
f) Poursuite de l'introduction du canal de forage si la vérification de la validation est réussie.

2. Procédé selon la revendication 1, dans lequel un avertissement préalable est émis lorsque la distance entre l'obstacle détecté et la tête de forage est inférieure à une deuxième distance, la deuxième distance étant notamment supérieure à la première distance.

3. Procédé selon la revendication 1 ou 2, dans lequel l'indication de la position d'un obstacle détecté par rapport à la tête de forage comprend un affichage de plusieurs vues.

4. Procédé selon l'une des revendications 1 à 3, dans lequel l'indication de la position d'un obstacle détecté par rapport à la tête de forage comprend une indication d'une extension au moins bidimensionnelle d'un obstacle détecté.

5. Procédé selon l'une des revendications 1 à 4, dans lequel la validation est effectuée au moyen d'une entrée alphanumérique, d'une entrée de clé et/ou d'un actionnement d'un ou plusieurs éléments d'actionnement.

6. Procédé selon l'une des revendications 1 à 5, dans lequel un protocole d'affichage de la position d'un obstacle détecté par rapport à la tête de forage est établi et/ou un avertissement préalable et/ou un avertissement d'arrêt et/ou une validation est émis.

7. Procédé selon la revendication 6, dans lequel la tête de forage est déplacée en arrière dans le sol après un avertissement d'arrêt, et le protocole est utilisé pour contourner au moins un obstacle détecté.

8. Procédé selon l'une des revendications 1 à 7, dans lequel le procédé est exécuté sur un ordinateur.

9. Produit de programme informatique comprenant des instructions qui, lorsque le programme est exécuté par un ordinateur, amènent ce dernier à exécuter un procédé selon l'une des revendications 1 à 7 avec un dispositif de forage du sol pour l'introduction d'un canal de forage dans le sol.

10. Support de données lisible par ordinateur sur lequel est stocké le produit de programme informatique selon la revendication 9 et lisible par l'ordinateur d'un dispositif de forage du sol pour exécuter le procédé selon l'une des revendications 1 à 7.

11. Dispositif de forage du sol destiné à l'introduction d'un canal de forage dans le sol, le dispositif de forage du sol comprenant une tête de forage qui est déplacée pour l'introduction du canal de forage dans le sol et comprenant un dispositif pour la détection des obstacles devant et/ou à côté de la tête de forage, le dispositif de forage du sol étant conçu pour indiquer la position d'un obstacle détecté par rapport à la tête de forage et pour émettre un avertissement préalable et/ou un avertissement d'arrêt, l'avertissement préalable étant émis lorsque la distance entre l'obstacle détecté et la tête de forage est inférieure à une première distance, et l'avertissement d'arrêt est émis lorsque la distance entre l'obstacle détecté et la tête de forage est inférieure à une deuxième distance, la première distance étant supérieure à la deuxième distance, et le dispositif de forage du sol est en outre conçu pour arrêter l'introduction du canal de forage lorsqu'un avertissement d'arrêt est émis, une entrée étant prévue comme demande de sécurité sous la forme d'une validation de l'avertissement d'arrêt émis, et le dispositif de forage du sol étant conçu pour reprendre l'introduction du canal de forage en cas de vérification réussie de la validation.

12. Dispositif de forage du sol selon la revendication 11, dans lequel il est prévu un dispositif d'affichage qui est configuré pour afficher la position d'un obstacle détecté par rapport à la tête de forage et qui comprend un affichage de plusieurs vues.

13. Dispositif de forage du sol selon la revendication 11 ou 12, dans lequel une entrée alphanumérique, une entrée de clé et/ou un ou plusieurs éléments d'actionnement sont prévus pour la validation.

14. Dispositif de forage du sol selon l'une des revendications 11 à 13, dans lequel il existe une mémoire dans laquelle est stocké un protocole d'indication de la position d'un obstacle détecté par rapport à la tête de forage et/ou de l'émission d'un avertissement préalable et/ou d'un avertissement d'arrêt.

15. Dispositif de forage du sol selon la revendication 14, dans lequel il existe une commande au moyen de laquelle la tête de forage est au moins partiellement déplacée en arrière et/ou avancée de manière orientée pour contourner l'au moins un obstacle.
